# EUROPÄISCHE PATENTSCHRIFT

(11) **EP 2 490 786 B1**
(45) Veröffentlichungstag und Bekanntmachung des Hinweises auf die Patenterteilung: **18.03.2015**
(21) Anmeldenummer: 10751625.4
(22) Anmeldetag: 31.08.2010
(51) Int. Cl.: B01D 29/96, B01D 35/153

(54) **FILTEREINRICHTUNG**
FILTER DEVICE
DISPOSITIF À FILTRE

(30) Priorität: 20.10.2009 DE 102009049868
(43) Veröffentlichungstag der Anmeldung: 29.08.2012
(73) Patentinhaber: Mahle International GmbH, 70376 Stuttgart (DE)
(72) Erfinder: DESCHAMPS, Gregory, F-78180 Montigny-Le-BTX (FR); LAMOTTE, Johann, F-95260 Beaumont sur Oise (FR)
(74) Vertreter: BRP Renaud & Partner mbB Rechtsanwälte Patentanwälte Steuerberater
(86) Internationale Anmeldenummer: PCT/EP2010/062684
(87) Internationale Veröffentlichungsnummer: WO 2011/047913

(56) Entgegenhaltungen:
- EP-A1- 1 479 427
- DE-A1- 3 903 675
- DE-A1- 10 353 424
- DE-A1-102007 062 102
- DE-U1-202005 002 955
- US-A1- 2009 008 317
- US-B1- 6 572 768

## Beschreibung

Die vorliegende Erfindung betrifft eine Filtereinrichtung, insbesondere ein Öl- oder Kraftstofffilter, mit einem, einen Filtergehäusetopf und einen Filtergehäusedeckel aufweisenden Filtergehäuse gemäß dem Oberbegriff des Anspruchs 1.

Bei gattungsgemäßen Filtereinrichtungen ist zur Sicherstellung der Verwendung eines autorisierten Ringfilterelements an diesem oftmals ein axial von einer unteren Endscheibe abstehender Pin angeordnet, mittels welchem das Ringfilterelement bei montierter Filtereinrichtung in einen filtergehäusetopfseitigen Kanal eingreift und eine Inbetriebnahme der Filtereinrichtung ausschließlich dann möglich ist, sofern das verwendete Ringfilterelement den erforderlichen Pin an der richtigen Stelle aufweist. Hierdurch können insbesondere die Verwendung von nicht autorisierten Ringfilterelementen vermieden und dadurch Schäden an bspw. einem Verbrennungsmotor verhindert werden. Als schwierig hat sich bei derartigen Filtereinrichtungen jedoch oftmals deren Montage, insbesondere die Montage des Ringfilterelements im Filtergehäuse erwiesen.

Aus der DE 20 2005 002 955 U1 ist ein Filtereinsatz für einen Flüssigkeitsfilter mit zwei Stirnscheiben bekannt, welcher einen Verschlussdorn (Pin) aufweist, der einen Ableitungskanal zur Entleerung des Filters beim Wechseln des Filtereinsatzes verschließt, wenn der Filtereinsatz eingesetzt ist.

Aus der DE 10 2007 062 102 A1 ist eine Filtereinrichtung mit einem Filtergehäuse zur Aufnahme eines Filterelements bekannt, wobei das Filterelement einen axial und exzentrisch abstehenden Zapfen (Pin) aufweist, der im eingesetzten Zustand in eine im Filtergehäuse ausgebildete Zapfenaufnahme eingesteckt ist.

Aus der DE 103 53 424 A1 ist ein Flüssigkeitsfilter mit einem Filtergehäuse und einem austauschbar in das Filtergehäuse einsetzbares Ringfilterelement, das an seinem Boden ein exzentrisch angeordnetes Steckverschlusselement (Pin) aufweist und das von dem Steckverschlusselement getrennt ausgebildete Führungsmittel aufweist.

Die vorliegende Erfindung beschäftigt sich deshalb mit dem Problem, für eine Filtereinrichtung der gattungsgemäßen Art, eine verbesserte oder zumindest eine alternative Ausführungsform anzugeben, welche einerseits konstruktiv einfach aufgebaut ist und andererseits eine Montage der Filtereinrichtung erleichtert.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einer an sich bekannten Filtereinrichtung mit einem, einen Filtergehäusetopf und einen Filtergehäusedeckel aufweisenden Filtergehäuse, am Filtergehäusetopf einen rohrförmigen Dom vorzusehen, der als Führung für ein in den Filtergehäusetopf einzusetzendes Ringfilterelement dient. Das zu verwendende Ringfilterelement weist an einer unteren Endscheibe einen axial abstehenden Pin auf, mittels welchem es bei montierter Filtereinrichtung zumindest teilweise in einen filtergehäusetopfseitigen Kanal eingreift und diesen dicht verschließt. Der erfindungsgemäß am Filtergehäusetopf vorgesehene rohrförmige Dom greift bei montierter Filtereinrichtung in einen Innenraum des Ringfilterelements ein. An seinem freien Ende weist dieser erfindungsgemäße rohrförmige Dom eine Führungskontur auf, die mit einem am Ringfilterelement angeordneten Führungselement derart zusammenwirkt, dass dieses bei der Montage entlang der Führungskontur geführt wird und dadurch ein einfaches und passgenaues Einführen des Pins in den filtergehäusetopfseitigen Kanal ermöglicht. Das Vorsehen der Führungskontur an dem rohrförmigen Dom des Filtergehäusetopfs bietet dabei nicht nur eine konstruktiv äußerst einfache Möglichkeit, das Ringfilterelement zu führen, sondern es kann hierdurch insbesondere auch auf andere, oftmals aufwendig gestaltete, Führungskonturen verzichtet werden. Trotz der konstruktiv relativ einfachen Ausführungsform der Führungskontur, bewirkt diese bei der Montage der Filtereinrichtung ein exaktes und zielgerichtetes Führen des Ringfilterelements, wobei bei einem Entlanggleiten des ringfilterelementseitigen Pins entlang der Führungskontur dieser zuverlässig in Richtung des filtergehäusetopfseitigen Kanals geführt und auch in diesen eingeführt werden kann. Das Führungselement ist dabei als ein radial nach innen gerichteter Führungspin ausgebildet. Mit dem erfindungsgemäß vorgesehenen rohrförmigen Dom mit seiner Führungskontur kann somit auch die Montage der Filtereinrichtung deutlich vereinfacht werden.

Bei der erfindungsgemäßen Lösung, weist die domseitige Führungskontur eine Axialnut auf, zu welcher das Führungselement bei der Montage der Filtereinrichtung hingeführt wird, und die relativ zu dem ringfilterelementseitigen Pin derart angeordnet ist, dass dieser in den filtergehäusetopfseitigen Kanal eingeführt wird, sofern das Führungselement in die Axialnut eintritt. Diese genaue Ausrichtung des Pins relativ zum Führungselement und das Zusammenwirken des Führungselements mit der domseitigen Führungskontur bewirkt, dass ausschließlich autorisierte Ringfilterelemente in die Filtereinrichtung eingesetzt werden können, nicht hingegen andere Ringfilterelemente, die bspw. keinen Pin aufweisen. Bei diesen wird der filtergehäusetopfseitige Kanal nicht verschlossen und eine das Ringfilterelement umgehende Bypassströmung ermöglicht, die die Filterwirkung der Filtereinrichtung stark reduziert. Bei der Verwendung von Ringfilterelementen mit Pin, muss sowohl das Führungselement als auch ein Abstand zwischen diesem und dem Pin genau vordefinierten Maßen entsprechen, damit bei einem Zusammenwirken des Führungselements mit der domseitigen Führungskontur der Pin auch in den filtergehäusetopfseitigen Kanal eintritt, sofern das Führungselement in die Axialnut der Führungskontur geschoben wird. Generell ist somit die Verwendung von nicht autorisierten Ringfilterelementen zumindest stark erschwert, wodurch Schädigungen an einem mit der Filtereinrichtung verbundenen Verbrennungsmotor reduziert bzw. gänzlich ausgeschlossen werden können.

Bei einer vorteilhaften Weiterbildung der erfindungsgemäßen Lösung, ist die Führungskontur am Dom in der Art einer kreisförmigen Rampe ausgebildet, wobei die Axialnut zwischen der höchsten und der tiefsten Stelle der Rampe angeordnet ist. Bei einem Aufsetzen des Ringfilterelements gleitet dieses somit mit seinem Führungselement entlang der kreisförmigen Rampe bis es die Axialnut erreicht und in diese eingeschoben werden kann, oder hineinrutscht.

Dieser Einschiebe- bzw. Gleitvorgang kann dabei bspw. mittels eines Aufschraubvorgangs des Filtergehäusedeckels auf dem Filtergehäusetopf erzeugt werden. Alternativ ist auch denkbar, dass die Führungskontur am Dom in der Art einer abgeschrägten Kanüle ausgebildet ist, wobei an der tiefsten Stelle die Axialnut angeordnet ist. In diesem Fall kann ebenfalls ein besonders leichtgängiges Zuführen des Führungselements zur Axialnut und damit ein besonders leichtgängiges Zuführen des Pins zum filtergehäusetopfseitigen Kanal erreicht werden. Im Unterschied zu aus dem Stand der Technik bekannten Filtereinrichtungen, bei welchen der ringfilterelementseitige Pin oftmals als Gleitelement benutzt wurde, muss der erfindungsgemäße Pin eine derartige Gleicheigenschaft nicht mehr aufweisen und kann deshalb bspw. auch aus einem elastischen Material, insbesondere aus Gummi, ausgebildet sein. Der rohrförmige Dom am Filtergehäusetopf kann dabei bspw. einen Teil eines Reinkanals bilden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Filtereinrichtung in einer Schnittdarstellung,
- Fig. 2: eine erste mögliche Ausführungsform einer Führungskontur an einem rohrförmigen Dom der Filtereinrichtung,
- Fig. 3: eine Darstellung wie in Fig. 2, jedoch bei einer anders ausgebildeten Führungskontur,
- Fig. 4a bis d: ein Zusammenwirken von Führungselement und Führungskontur bei einer Ausbildung gemäß der Fig. 3,
- Fig. 5a bis d: eine Darstellung wie in Fig. 4, jedoch bei einer gemäß der Fig. 2 ausgebildeten Führungskontur,
- Fig. 6: eine mögliche Ausführungsform eines axial von einer Endscheibe abstehenden Pins,
- Fig. 7: eine Ansicht auf ein Ringfilterelement wie in Fig. 6, jedoch bei einer anderen Ausführungsform des Pins,
- Fig. 8: eine Schnittdarstellung wie in Fig. 6, jedoch bei einer Ausführungsform des Pins wie in Fig. 7,
- Fig. 9: eine Schnittdarstellung durch die Filtereinrichtung sowie eine Ansicht auf eine mögliche Ausführungsform einer weiteren Endscheibe des Ringfilterelements mit nach oben gerichteter Dichtlippe,
- Fig. 10: eine Darstellung wie in Fig. 9, jedoch bei einer unteren Endscheibe mit nach unten gerichteter Dichtlippe,
- Fig. 11a, b: unterschiedliche Ausführungsformen von unteren Endscheiben mit individuellen Dichtungen,
- Fig. 12: eine Explosionsdarstellung und eine Zusammenbaustellung einer stützstrukturartigen Innenzarge mit der unteren Endscheibe des Ringfilterelements,
- Fig. 13a: eine Schnittdarstellung durch die untere Endscheibe im Verbindungsbereich mit der Innenzarge,
- Fig. 13b: eine Darstellung wie in Fig. 13a, jedoch mit anders gerichteter Dichtlippe,
- Fig. 14: eine Darstellung wie in Fig. 12, jedoch bei unterschiedlicher Dichtung,
- Fig. 15a, b: Schnittdarstellungen durch die untere Endscheibe im Verbindungsbereich mit der Innenzarge und unterschiedlichen Dichtungen,
- Fig. 16a bis c: unterschiedliche Ausführungsformen der unteren Endscheibe und der zugehörigen Dichtungen,
- Fig. 17a, b: zwei Montageschritte des Ringfilterelements im Filtergehäusetopf,
- Fig. 18: eine Schnittdarstellung durch eine weitere Filtereinrichtung,
- Fig. 19: jeweils Schnittdarstellungen durch die Filtereinrichtung gemäß der Fig. 18 im Bereich eines Bypassventils sowie eines Rückschlagventils.

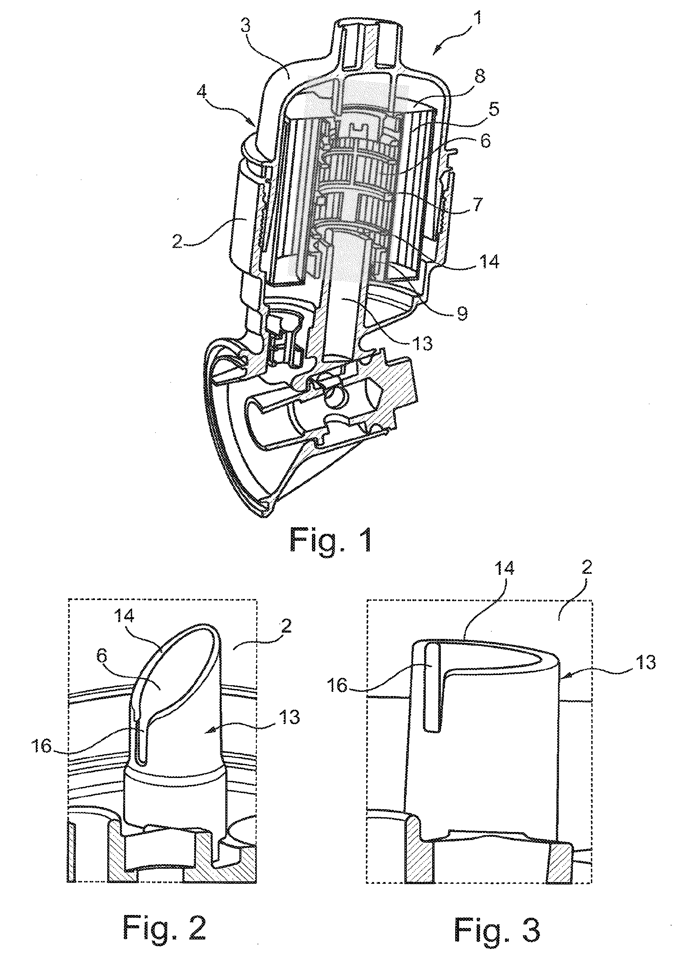

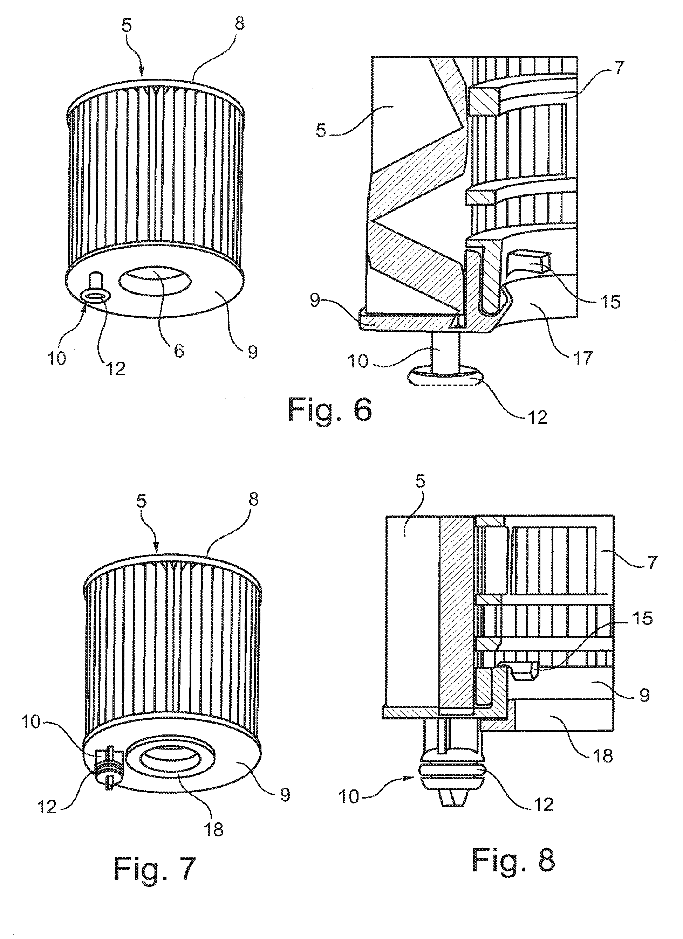

Entsprechend der Fig. 1, weist eine erfindungsgemäße Filtereinrichtung 1, bspw. ein Öl- oder Kraftstofffilter, bzw. Luftfilter für ein Kraftfahrzeug, ein, aus einem Filtergehäusetopf 2 und einem damit verschraubbaren Filtergehäusedeckel 3 gebildetes Filtergehäuse 4 auf. Innerhalb des Filtergehäuses 4 ist dabei ein an sich bekanntes Ringfilterelement 5 angeordnet, welches bezüglich eines Innenraums 6 bspw. mittels einer stützstrukturartigen Innenzarge 7 abgestützt ist. Das Ringfilterelement 5 ist dabei ebenfalls in bekannter Weise von einer oberen Endscheibe 8 und einer unteren Endscheibe 9 in Axialrichtung begrenzt. In Axialrichtung von der unteren Endscheibe 9 abstehend ist dabei ein Pin 10 vorgesehen (vgl. bspw. die Fig. 6 und 7), der bei komplett montierter Filtereinrichtung 1 in einen filtergehäusetopfseitigen Kanal 11 vorzugsweise dicht eingreift und diesen dadurch verschließt. Hierzu kann an dem Pin 10 ein in bekannter Weise ausgebildetes Dichtelement, bspw. eine O-Ring-Dichtung 12, vorgesehen sein. Kanal 11 ist dabei in den meisten Fällen ein Leerlaufkanal.

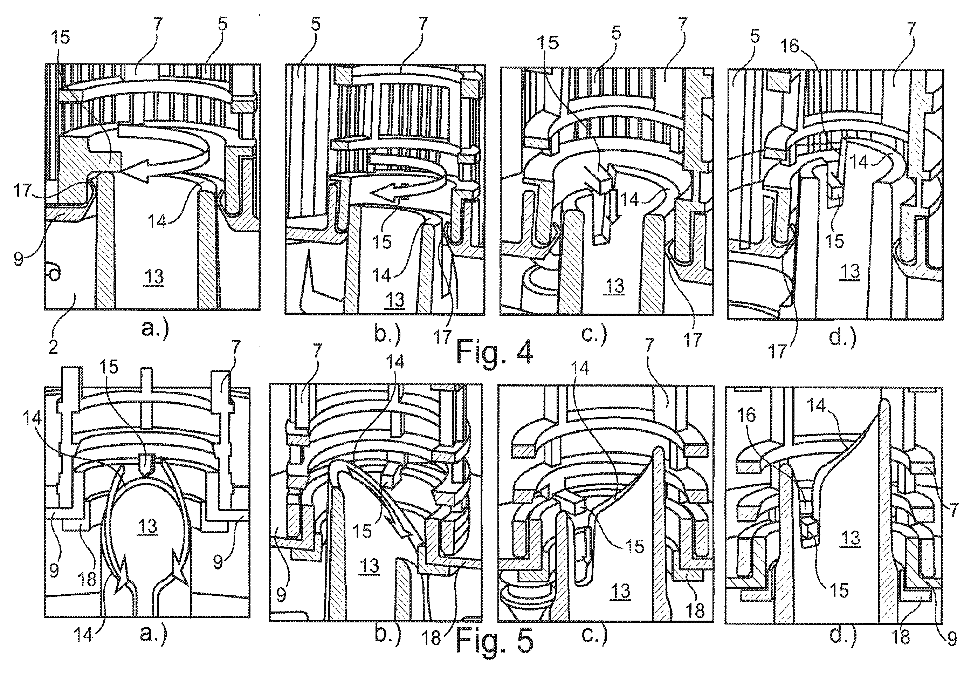

Am Filtergehäusetopf 2 ist darüber hinaus ein rohrförmiger Dom 13 (vgl. Fig. 2 und 3) vorgesehen, der bei montierter Filtereinrichtung 1 in den Innenraum 6 des Ringfilterelements 5 eingreift und bspw. einen Teil eines Reinkanals bildet. Erfindungsgemäß ist nun an einem freien Ende dieses rohrförmigen Doms 13 eine Führungskontur 14 vorgesehen, die mit einem an dem Ringfilterelement 5 angeordneten Führungselement 15 (vgl. bspw. Fig. 4 und 5) zusammenwirkt. Diese Führungskontur 14 kann bspw. in der Art einer kreisförmigen Rampe ausgebildet sein, wie dies in der Fig. 3 dargestellt ist, oder aber in der Art einer abgeschrägten Kanüle, was bspw. gemäß der Fig. 2 dargestellt ist. Beiden Führungskonturen 14 ist dabei gemein, dass diese eine Axialnut 16 aufweisen, zu welcher das Führungselement 15 bei der Montage der Filtereinrichtung 1 hingeführt wird und die relativ zum Pin 10 derart ausgerichtet ist, dass dieser in den filtergehäusetopfseitigen Kanal 11 einführbar ist, sofern das Führungselement 15 in die Axialnut 16 eintritt bzw. eingeschoben wird.

Eine Montage der Filtereinrichtung 1 ist in verschiedenen Verfahrensschritten gemäß den Fig. 4a bis 4d dargestellt. Zunächst wird das Ringfilterelement 5 im Montageschritt 4a in den Filtergehäusetopf 2 eingesetzt und zwar soweit, bis dieses mit dem Führungselement 15 auf der domseitigen Führungskontur 14 aufliegt. Anschließend wird das Ringfilterelement 5, bspw. durch Aufschrauben des Filtergehäusedeckels 3, verdreht, so dass das Führungselement 15, wie dies gemäß der Fig. 4b dargestellt ist, entlang der Führungskontur 14 entlang gleitet und zwar bis zur Axialnut 16, die vorzugsweise zwischen der höchsten und der tiefsten Stelle der rampenartig ausgebildeten Führungskontur 14 angeordnet ist. Nach dem Erreichen der Axialnut 16 ist der Pin 10 koaxial fluchtend zum Kanal 11 ausgerichtet, so dass das Ringfilterelement 5 in Axialrichtung mit dem Führungselement 15 in die Axialnut 16 und gleichzeitig mit dem Pin 10 in den Kanal 11 eingeschoben werden kann. Dieser Zustand ist bspw. gemäß der Fig. 4d gezeigt.

In gleicher Weise funktioniert ein Einbauvorgang des Ringfilterelements 5 bei einer Ausbildung der Führungskontur 14 in der Art einer Kanüle, wie dies gemäß den Fig. 5a bis 5d dargestellt ist. Bei einer derartigen Führungskontur 14 liegt die Axialnut 16 vorzugsweise an der tiefsten Stelle der Führungskontur 14. Unerheblich dabei ist, ob das Führungselement 15, wie bspw. gemäß den Fig. 4a bis 4d dargestellt ist, an der Innenzarge 7, oder wie in den Fig. 5a bis 5d dargestellt ist, an der unteren Endscheibe 9 angeordnet ist. In beiden Fällen ist hierbei das Führungselement 15 als nach radial innen gerichteter Führungspin ausgebildet.

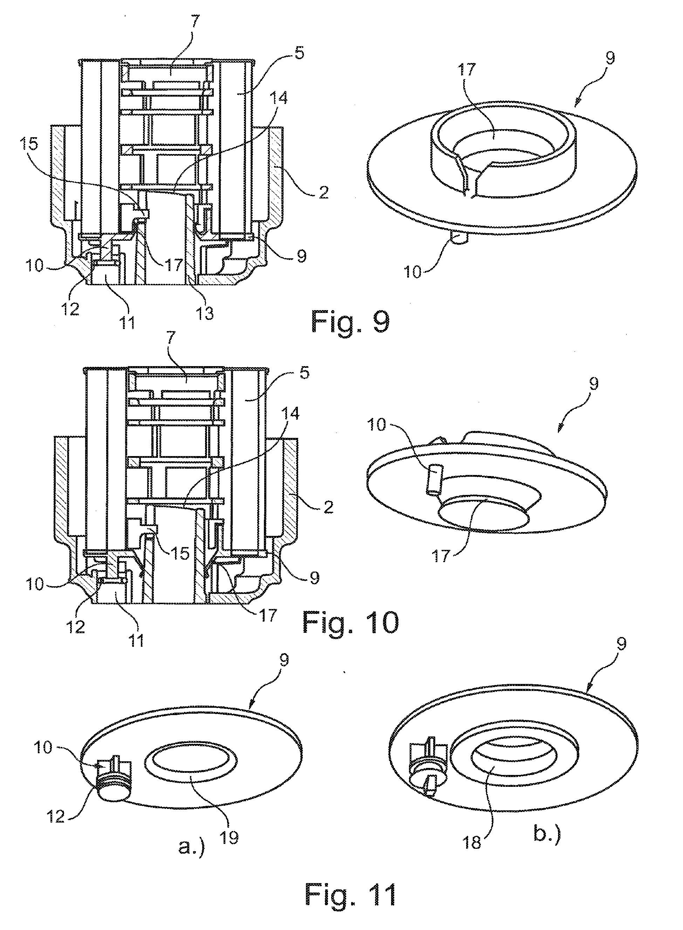

Betrachtet man die Fig. 4a bis 4d, so kann man erkennen, dass die untere Endscheibe 9 bezüglich des Doms 13 über eine Dichtungslippe 17 abgedichtet ist, die sich bei eingebautem Ringfilterelement 5 dicht an eine Außenfläche des rohrförmigen Doms 13 anlegt. Diese Dichtungslippe 17 ist dabei flexibel und vorzugsweise einstückig mit der unteren Endscheibe 9 ausgebildet. Für die Dichtfunktion ist es dabei unerheblich, ob die Dichtungslippe 17 eingebautem Ringfilterelement 5 nach oben weist, wie dies bspw. gemäß der Fig. 9 gezeigt ist, oder nach unten, wie dies bspw. gemäß der Fig. 10 gezeigt ist. Alternativ ist auch vorstellbar, dass an der unteren Endscheibe 9 ein separater Dichtring 18 vorgesehen ist, der sich bei eingebautem Ringfilterelement 5 dicht an die Außenfläche des rohrförmigen Doms 13 anlegt. Ein derartiger Dichtring 18 ist bspw. in den Fig. 5, 7, 11, 14, 15a und 16c gezeigt.

Von besonderem Vorteil bei der erfindungsgemäßen Filtereinrichtung 1 ist, dass nicht wie bisher aus dem Stand der Technik, der Pin 10 an der Rampe entlang gleitet und dadurch als Gleitelement ausgebildet ist, sondern vielmehr elastisch, bspw. aus Gummi ausgebildet werden kann, da der Pin 10 keinerlei Gleiteigenschaften mehr aufweisen muss.

Betrachtet man die Fig. 6, so kann man erkennen, dass im Unterschied zur Fig. 7 und 8, der Pin 10 einfach rohrförmig ausgebildet sein kann und eine O-Ringdichtung 12 an einem Kopf trägt. Demgegenüber kann der Pin 10 selbstverständlich auch eine kreuzartige Querschnittsstruktur aufweisen, wie dies bspw. gemäß den Fig. 7 und 8 erkennbar ist, wodurch der Pin 10 insgesamt steifer wird. Das Ringfilterelement 5 kann generell als Faltenstern mit einem papiernen oder fließförmigen Filtermaterial ausgebildet sein.

Gemäß der Fig. 9 ist ein Ringfilterelement 5 bzw. im Detail deren untere Endscheibe 9 gezeigt, welche ebenfalls einen lediglich rohrförmigen Pin 10 aufweist, an dessen freien Ende eine O-Ringdichtung 12 noch angeordnet wird. Im Unterschied zur Fig. 10 weist dabei die untere Endscheibe 9 des Ringfilterelements 5 gemäß der Fig. 9 eine nach oben weisende Dichtlippe 17 auf. Dabei ist generell vorstellbar, dass die komplette untere Endscheibe 9 aus einem einzigen Material, bspw. aus Kunststoff oder Gummi, hergestellt, insbesondere gespritzt wird, so dass die Dichtlippe 17 lediglich an die untere Endscheibe 9 angeformt ist.

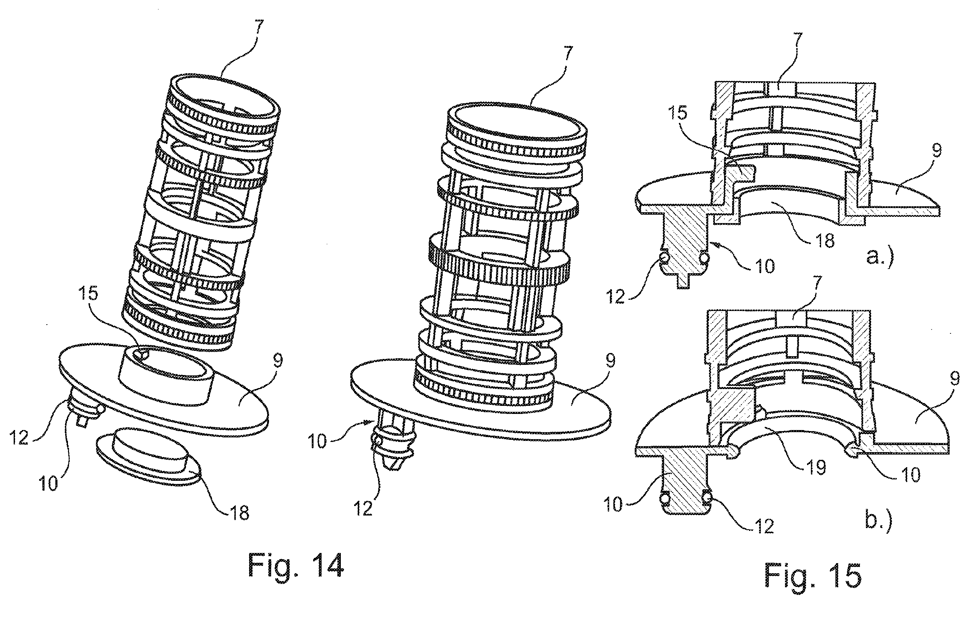

Gemäß den Fig. 11a und 11b sind unterschiedliche Dichtungen 18,19 gezeigt, wobei die Dichtung gemäß der Fig. 11a, ähnlich wie der gemäß der Fig. 15b, bspw. lediglich als dichtende Beschichtung 19 auf einem nach radial innen weisenden Ringsteg 20 ausgebildet ist. Demgegenüber ist der Dichtring 18, wie dieser gemäß den Fig. 11b, 14 und 15a dargestellt ist, als separates Bauteil ausgebildet, bspw. aus Silikon oder einem Vlies.

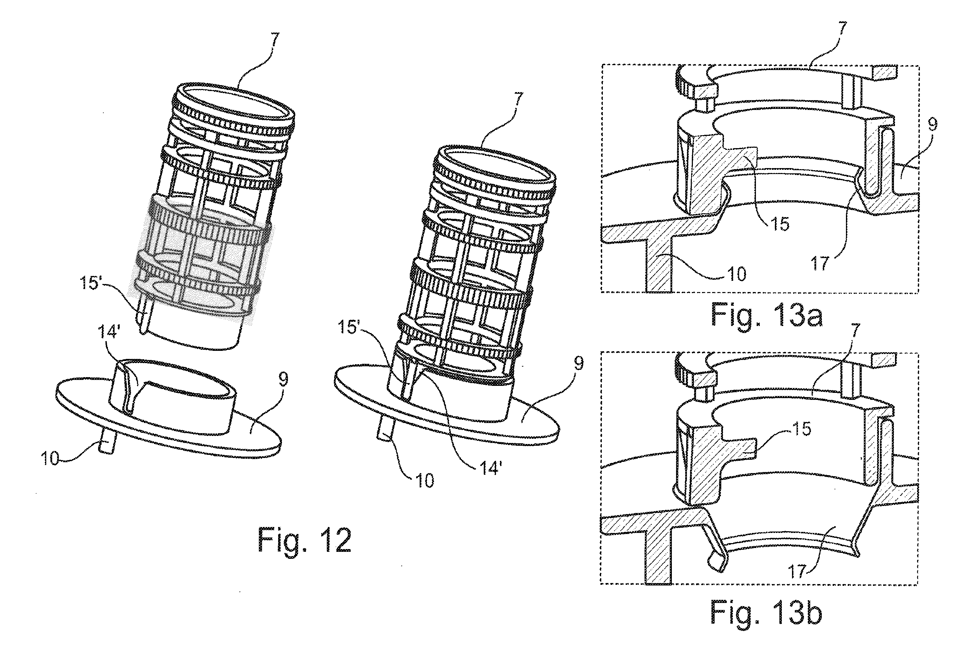

Gemäß der Fig. 12 sind eine Explosionsdarstellung sowie eine Montagestellung der Innenzarge 7 mit der zugehörigen unteren Endscheibe 9 gezeigt, wobei diese im Fall der Fig. 13a eine nach oben gerichtete Dichtlippe 17 und im Fall der Fig. 13b eine nach unten gerichtete Dichtlippe 17 aufweisen kann. Das Führungselement 15 ist dabei an der Innenzarge 7 angeordnet, welche zugleich ein weiteres Führungselement 15' aufweist, das mit einer an der unteren Endscheibe 9 angeordneten Führungskontur 14' zusammenwirkt. Demgegenüber ist das Führungselement 15 gemäß den Fig. 14 und 15 an der unteren Endscheibe 9 angeordnet. Im Unterschied zu Fig. 13a,b, weist die untere Endscheibe 9 nach der Fig. 15 keine Dichtlippe 17 sondern vielmehr einen Dichtring 18 (vgl. Fig. 15a) oder eine dichtenden Beschichtung 19 (vgl. Fig. 15b) auf.

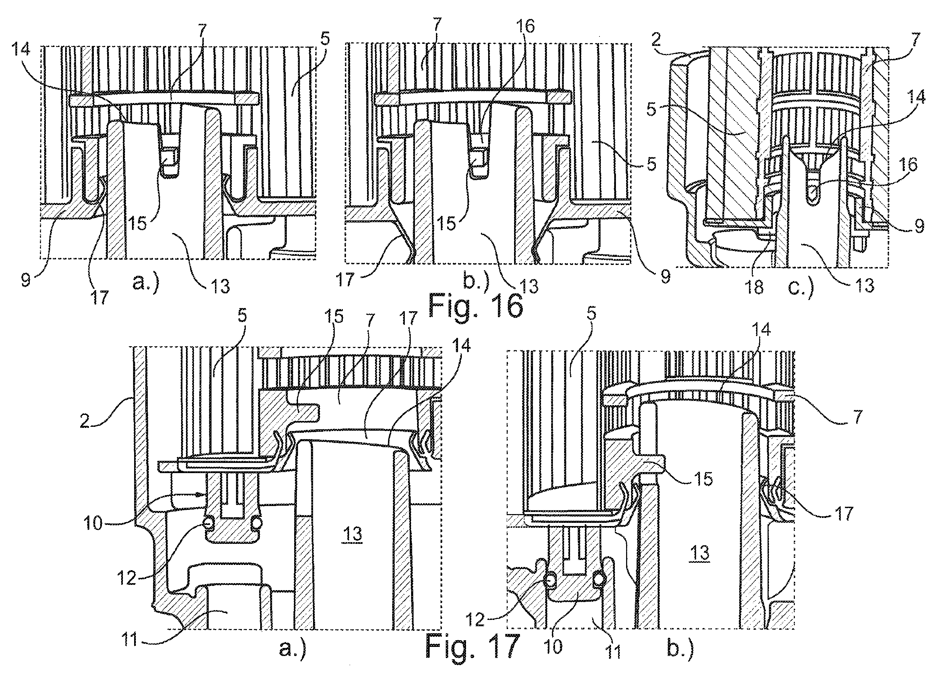

Gemäß den Fig. 16a, b und c sind nochmals die einzelnen Dichtvarianten gezeigt, so dass gemäß der Fig. 16a eine nach oben weisende und am Dom 13 anliegende Dichtlippe 17 gezeigt ist, während die untere Endscheibe 9 gemäß der Fig. 16b eine nach unten gerichtete Dichtlippe 17 aufweist. Gemäß der Fig. 16c ist eine weitere Variante der Führungskontur 14 gezeigt, wobei in diesem Fall an der unteren Endscheibe 9 ein zusätzlicher Dichtring 18 angeordnet ist. Gemäß den Fig. 17a und 17b wird noch mal veranschaulicht, wie sich die Dichtlippe 17 in der Ausführungsform nach der Fig. 16a, an die Außenmantelfläche des Doms 13 anlegt, sofern das Ringfilterelement 5 seine Enddrehwinkelstellung erreicht hat und in dieser axial nach unten verschoben werden kann. Eine Bedingung für dieses axiale Verschieben des Ringfilterelements 5 über den Dom 13 ist, dass sich das ringfilterelementseitige Führungselement 15 in der Axialnut 16 befindet, was gleichzeitig bedeutet, dass der Pin 10 koaxial fluchtend zum filtergehäusetopfseitigen Kanal 11 angeordnet und in diesem eingeführt werden kann. Dies ist bspw. gemäß den Fig. 17a und 17b dargestellt.

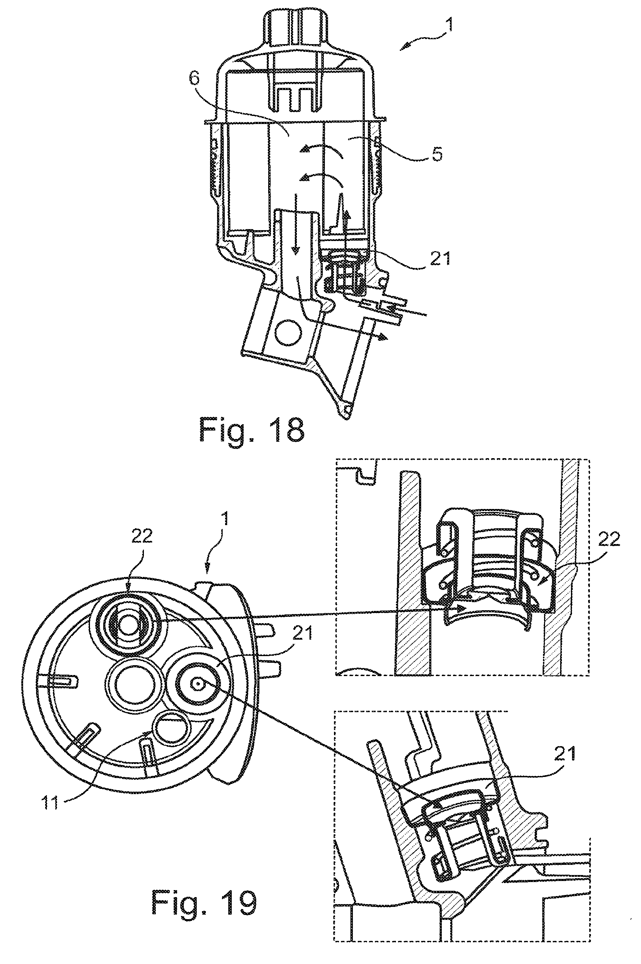

In Fig. 18 ist eine weitere Filtereinrichtung 1 gezeigt, mit einem Rückschlagventil 21 sowie einem Bypassventil 22. Auch in diesem Fall weist der Dom 13, welcher ebenfalls wiederum zentral angeordnet ist, eine Führungskontur 14 an seinem freien Ende auf, die mit einem nicht gezeigten filterelementseitigen Führungselement 15 zusammenwirkt. Auch hier ist am Ringfilterelement 5 bzw. an dessen unterer Endscheibe 9 ein nicht gezeigter Pin 10 angeordnet, der bei vollständig montierter Filtereinrichtung 1 in einen filtergehäusetopfseitigen Kanal 11 (vgl. Fig. 19) eingreift und diesen dadurch dicht verschließt.

Mit der erfindungsgemäßen Filtereinrichtung 1 lassen sich entscheidende Vorteile hinsichtlich des Betriebs und der Montage derselben erzielen: Zum einen kann eine Verwendung unautorisierter Ringfilterelemente, welche bspw. auch zu Schädigungen an einem Verbrennungsmotor führen würden, zuverlässig unterbunden werden, da diese sowohl das ringfilterelementseitige Führungselement 15, als auch die domseitige Führungskontur 14 sowie den exakt zum Führungselement 15 ausgerichteten Pin 10 aufweisen müssten, um korrekt in die Filtereinrichtung 1 eingebaut werden zu können. Wird bspw. ein Ringfilterelement ohne Pin 10 verwendet, so wird der Kanal 11, insbesondere der Leerlaufkanal, nicht dicht verschlossen und es erfolgt eine das Ringfilterelement umgehende Bypassströmung. Gleichzeitig kann die Montage und insbesondere das Wechseln des erfindungsgemäßen Ringfilterelements 5 deutlich vereinfacht werden, da mittels des Führungselements 15 und der Führungskontur 14 eine Zwangsführung gegeben ist, die das Ringfilterelement 5 beim Aufschrauben des Filtergehäusedeckels 3 zwangsweise derart positioniert, dass der Pin 10 fluchtend zum Kanal 11 ausgerichtet und somit problemlos in diesen eingeführt werden kann. Von weiterem Vorteil ist, dass bei vorliegender Filtereinrichtung 1 der Pin 10 keine Gleiteigenschaften mehr aufweisen muss und aus diesem Grund bspw. deutlich flexibler, insbesondere aus Gummi, ausgebildet werden kann.

## Patentansprüche

1. Filtereinrichtung (1), insbesondere ein Öl- oder Kraftstofffilter, mit einem, einen Filtergehäusetopf (2) und einen Filtergehäusedeckel (3) aufweisenden Filtergehäuse (4), in welchem ein Ringfilterelement (5) angeordnet ist, das an einer unteren Endscheibe (9) einen axial abstehenden Pin (10) aufweist, mittels welchem es bei montierter Filtereinrichtung (1) in einen filtergehäusetopfseitigen Kanal (11) eingreift, wobei am Filtergehäusetopf (2) ein rohrförmiger Dom (13) vorgesehen ist, der bei montierter Filtereinrichtung (1) in einen Innenraum (6) des Ringfilterelements (5) eingreift, und wobei an einem freien Ende des rohrförmigen Doms (13) eine Führungskontur (14) vorgesehen ist, die mit einem am Ringfilterelement (5) angeordneten Führungselement (15) zusammenwirkt,
wobei die domseitige Führungskontur (14) eine Axialnut (16) aufweist, zu welcher das Führungselement (15) bei der Montage der Filtereinrichtung (1) durch eine Drehbewegung des Ringfilterelements (5) hingeführt wird, und die relativ zum Pin (10) so angeordnet ist, dass dieser in den filtergehäuse-topfseitigen Kanal (11) einführbar ist, sofern das Führungselement (15) in die Axialnut (16) eintritt,
**dadurch gekennzeichnet,**
**dass** das Führungselement (15) als ein radial nach innen gerichteter Führungspin ausgebildet ist.

2. Filtereinrichtung nach Anspruch 1,
**dadurch gekennzeichnet,**
**dass** das Führungselement (15) an einer stützstrukturartigen Innenzarge (7) des Ringfilterelements (5) angeordnet ist, wobei diese stirnendseitig von der jeweiligen Endscheibe (8,9) eingefasst ist.

3. Filtereinrichtung nach Anspruch 1 oder 2,
**dadurch gekennzeichnet,**
**dass** zumindest an der dem Führungselement (15) benachbarten Endscheibe (9) eine Dichtlippe (17) angeordnet ist, die sich bei eingebautem Ringfilterelement (5) dicht an eine Außenfläche des rohrförmigen Doms (13) anlegt.

4. Filtereinrichtung nach Anspruch 3,
**dadurch gekennzeichnet,**
**dass** die Endscheibe (9) und die Dichtlippe (17) einstückig ausgebildet sind.

5. Filtereinrichtung nach einem der Ansprüche 1 bis 4,
**dadurch gekennzeichnet,**
**dass** an der unteren Endscheibe (9) ein separater Dichtring (18) vorgesehen ist, der sich bei eingebautem Ringfilterelement (5) dicht an eine Außenfläche des rohrförmigen Doms (13) anlegt.

6. Filtereinrichtung nach einem der Ansprüche 1 bis 5,
**dadurch gekennzeichnet,**
- **dass** die Führungskontur (14) in der Art einer kreisförmigen Rampe ausgebildet ist, wobei die Axialnut (16) zwischen der höchsten und der tiefsten Stelle der Rampe angeordnet ist,
- **dass** die Führungskontur (14) in der Art einer abgeschrägten Kanüle ausgebildet ist, wobei an der tiefsten Stelle die Axialnut (16) angeordnet ist.

7. Filtereinrichtung nach einem der Ansprüche 1 bis 6,
**dadurch gekennzeichnet,**
**dass** der Pin (10) aus einem elastischen Material, insbesondere aus Gummi, ausgebildet ist.

## Claims

1. A filter device (1), in particular an oil or fuel filter, comprising a filter housing (4) having a filter housing crucible (2) and a filter housing cover (3), in which filter housing a ring filter element (5) is arranged, which has an axially projecting pin (10) on a lower end disc (9), by means of which pin the element engages in a channel (11) on the filter housing crucible side when the filter device (1) is assembled, whereby a tube-shaped dome (13) is provided on the filter housing crucible (2), which dome engages in an inner chamber (6) of the ring filter element (5) when the filter device (1) is assembled, and whereby a guide contour (14) is provided on a free end of the tube-shaped dome (13), which guide contour interacts with a guide element (15) arranged on the ring filter element (5), whereby the guide contour (14) on the dome side has an axial groove (16), towards which the guide element (15) is guided during assembly of the filter device (1), and which is arranged relative to the pin (10) in such a manner that the latter can be introduced into the channel (11) on the filter housing crucible side if the guide element (15) enters the axial groove (16),
**characterised in that**
the guide element (15) is formed as a guide pin which faces radially inwards.

2. The filter device according to Claim 1,
**characterised in that**
the guide element (15) is arranged on a support-structure-like inner shroud (7) of the ring filter element (5), wherein the inner shroud is enclosed at the ends by the respective end disc (8, 9).

3. The filter device according to Claim 1 or 2,
**characterised in that**
a sealing lip (17) is arranged at least on the end disc (9) adjacent to the guide element (15), which sealing lip bears against an outer face of the tube-shaped dome (13) in a leakproof manner when the ring filter element (5) is installed.

4. The filter device according to Claim 3,
**characterised in that**
the end disc (9) and the sealing lip (17) are formed in one piece.

5. The filter device according to one of Claims 1 to 4,
**characterised in that**
a separate sealing ring (18) is provided on the lower end disc (9), which seal bears against an outer face of the tube-shaped dome (13) in a leakproof manner when the ring filter element (5) is installed.

6. The filter device according to one of Claims 1 to 5,
**characterised in that**
- the guide contour (14) is formed like a circular ramp, the axial groove (16) being arranged between the highest and the lowest point of the ramp,
- the guide contour (14) is formed like an inclined hollow needle, the axial groove (16) being arranged at the lowest point.

7. The filter device according to one of Claims 1 to 6,
**characterised in that**
the pin (10) is formed from an elastic material, in particular from rubber.

## Revendications

1. Dispositif de filtre (1), notamment filtre à huile ou à carburant, comportant un logement de filtre (4) présentant un pot de logement de filtre (2) et un couvercle de logement de filtre (3), dans lequel un élément de filtre annulaire (5) est disposé, qui présente sur une rondelle d'extrémité inférieure (9) une goupille (10) dépassant en saillie axialement, au moyen de laquelle il s'engage, quand le dispositif de filtre (1) est monté, dans un canal (11) du côté du pot de logement de filtre, dans lequel sur le pot de logement de filtre (2) un mandrin tubulaire (13) est prévu, qui, lorsque le dispositif de filtre (1) est monté, s'engage dans un espace intérieur (6) de l'élément de filtre annulaire (5) et dans lequel sur une extrémité libre du mandrin tubulaire (13) un contour de guidage (14) est prévu, qui coopère avec un élément de guidage (15) disposé sur l'élément de filtre annulaire (5), dans lequel le contour de guidage (14) du côté du mandrin présente une rainure axiale (16), vers laquelle l'élément de guidage (15) lors du montage du dispositif de filtre (1) est guidé par l'intermédiaire d'un mouvement de rotation de l'élément de filtre annulaire (5), et qui est disposée par rapport à la goupille (10) de telle sorte que celle-ci puisse être insérée dans le canal du côté du pot de logement de filtre (11), dans la mesure où l'élément de guidage (15)entre dans la rainure axiale (16), **caractérisé en ce que** l'élément de guidage (15) est conçu comme une goupille de guidage orientée radialement vers l'intérieur.

2. Dispositif de filtre selon la revendication 1, **caractérisé en ce que** l'élément de guidage (15) est disposé sur un cadre intérieur (7) en forme de structure d'appui de l'élément de filtre annulaire (5), dans lequel celui-ci est enchâssé du côté d'extrémité frontal dans la rondelle d'extrémité (8,9) respective.

3. Dispositif de filtre selon la revendication 1 ou 2, **caractérisé en ce que** au moins sur la rondelle d'extrémité (9) voisine de l'élément de guidage (15) une lèvre d'étanchéité (17) est disposée, qui vient reposer de manière étanche sur une surface extérieure du mandrin tubulaire (13) quand l'élément de filtre annulaire (5) est monté.

4. Dispositif de filtre selon la revendication 3, **caractérisé en ce que** la rondelle d'extrémité (9) et la lèvre d'étanchéité (17) sont conçus en un seul tenant.

5. Dispositif de filtre selon une des revendications 1 à 4, **caractérisé en ce que** sur la rondelle d'extrémité inférieure (9) une bague d'étanchéité séparée (18) est prévue, qui vient reposer de manière étanche sur une surface extérieure du mandrin tubulaire (13) lorsque l'élément de filtre annulaire (5) est monté.

6. Dispositif de filtre selon une des revendications 1 à 5, **caractérisé en ce que**
- le contour de guidage (14) est conçu à la manière d'une rampe circulaire, dans lequel la rainure axiale (16) est disposée entre la position la plus haute et la plus basse de la rampe,
- le contour de guidage (14) est conçu à la manière d'une canule biseautée, dans lequel la rainure axiale (16) est située à la position la plus basse.

7. Dispositif de filtre selon une des revendications 1 à 6, **caractérisé en ce que** la goupille (10) est réalisée dans un matériau élastique, notamment en caoutchouc.
